(19) **Europäisches Patentamt**
**European Patent Office**
**Office européen des brevets**

(11) **EP 2 418 664 A1**

(12) **EUROPEAN PATENT APPLICATION**
published in accordance with Art. 153(4) EPC

(43) Date of publication:
**15.02.2012 Bulletin 2012/07**

(21) Application number: **10761320.0**

(22) Date of filing: **11.03.2010**

(51) Int Cl.:
**H01G 9/058** (2006.01)    **C01B 31/12** (2006.01)

(86) International application number:
**PCT/JP2010/001727**

(87) International publication number:
**WO 2010/116612 (14.10.2010 Gazette 2010/41)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **10.04.2009 JP 2009095724**

(71) Applicant: **JX Nippon Oil & Energy Corporation Chiyoda-ku Tokyo 100-8162 (JP)**

(72) Inventors:
• **FUJII, Masaki**
  **Chiyoda-ku,**
  **Tokyo**
  **1008162 (JP)**
• **KIUCHI, Noriyuki**
  **Chiyoda-ku,**
  **Tokyo**
  **1008162 (JP)**

• **SANOKAWA, Yutaka**
  **Chiyoda-ku,**
  **Tokyo**
  **1008162 (JP)**
• **TAGUCHI, Shinya**
  **Chiyoda-ku,**
  **Tokyo**
  **1008162 (JP)**
• **IKAI, Keizo**
  **Chiyoda-ku,**
  **Tokyo**
  **1008162 (JP)**

(74) Representative: **Piotrowicz, Pawel Jan Andrzej et al**
  **Venner Shipley LLP**
  **Byron House**
  **Cambridge Business Park**
  **Cowley Road**
  **Cambridge CB4 0WZ (GB)**

(54) **CARBON MATERIAL FOR ELECTRIC DOUBLE LAYER CAPACITOR ELECTRODE AND METHOD FOR PRODUCING SAME**

(57)    The present invention provides a method for producing a carbon material for an electric double layer capacitor, having a low internal resistance and a high capacitance per unit volume. The method comprises activating a graphitizable carbon material used as the raw material with 3 or more alkali metal compounds to produce an activated carbon having a BET specific surface area of 1500 to 3000 $m^2$/g and a pore diameter corresponding to the maximum value in the pore size distribution as determined by the MP method within the range of 1 to 2 nm.

**Fig.1**

Collector
Negative Electrode
Separator
Positive Electrode
Laminated Film

EP 2 418 664 A1

## Description

## Technical Field

The present invention relates to an activated carbon, which is a carbon material for an electric double layer capacitor electrode and a method for producing such a carbon material.

## Background Art

An activated carbon is made from carbon materials such as carbonized coconut shell, petroleum coke or coal coke that is activated to have a porous structure. The activated carbon, which is porous and thus has a large surface area has been widely used as an absorbent, a catalyst support, and an electrode material for double layer capacitors and lithium secondary batteries. In particular, in order to increase the energy density, i.e., capacitance in an electric double layer capacitor , which may be used in a hybrid car or the like, an activated carbon having fine pores effectively formed thereon, a high crystallinity and a large surface area has been demanded to be used as an electrode material for the capacitor.

For the industrial production of such an activated carbon with effectively formed fine pores that can be used as an electrode material of an electric double layer capacitor, a method for activation has been generally used, in which a carbon material such as petroleum coke and an alkali metal compound such as potassium hydroxide are heated at a temperature of 600 to 1200°C in an inert gas atmosphere to allow the alkali metal to ingress between and react with the graphite crystal layers. In this activation, the alkali metal enters the layered structure wherein condensed polycyclic hydrocarbons are layered, and as the result forms fine pores. Generally, the majority of fine pores of this activated carbon are micropores with a size of 1 nm or smaller, which is not such a fine pore diameter that is large enough for transfer of electrolyte ions. Under the circumstances, the activate carbon produced by the above-described method with a large specific surface area has not been effectively utilized.

Activated carbon has been considered important to contain fine pores within the mesopore range for ion adsorption/desorption because the electrolyte ions of an organic electrolyte for an electric double layer capacitor are about 1 nm in size which is within the micro pore range though depends on the type of an electrolyte and thus can not move smoothly if the activated carbon has only fine pores within the micro pore range (Non-Patent Literature 1). The use of sodium hydroxide as an activating agent is known as a method for enlarging the pore diameter of an activated carbon. However, this method has a problem that it can not produce an activated carbon having a larger specific surface area because sodium hydroxide is poorer in activation power than potassium hydroxide. Furthermore, the formation of many mesopores by activation increases the number of void portions and thus leads to a problem that the resulting electrode is decreased in bulk density and in capacity per volume.

Patent Literature 1 describes that the use of a mixed activating agent of potassium hydroxide and sodium hydroxide enables the production of a carbon material having a pore diameter of 2 nm or larger for a double layer capacitor electrode, comparing a single use of potassium hydroxide or sodium hydroxide, and an electric double layer capacitor produced using the carbon material is higher in capacitance per unit volume. However, the electrode formed from the carbon material is relatively high in internal resistance, and thus has been required to be further improved. Patent Literature 2 describes that a polarizing electrode produced using a mixed activating agent of potassium hydroxide and sodium hydroxide can be decreased in the extent of expansion during charging compared with a single use of KOH. However, the electrode exhibits a tendency that the electric resistance increases due to the use of the mixture.

## Citation List

## Patent Literature

Patent Literature 1: Japanese Patent Laid-Open Publication No. 2001-302226
Patent Literature 2: Japanese Patent Laid-Open Publication No. 2002-15958

## Non Patent Literature

Non Patent Literature 1: "Tansozairyo no kenkyu kaihatsu doko" at pages 23 to 33, published in March, 2009 by CPC Society

## Summary of Invention

### Technical Problem

The present invention was accomplished on the basis of the finding that activation of a raw material that is a graphitizable carbon with three or more alkali metal compounds can produce an activated carbon with a BET specific surface area and a pore diameter corresponding to the maximum value in the pore size distribution as determined by the MP method, each adjusted in a specific range, and also the use of such an activated carbon as an electrode material enables the production of an electric double layer capacitor that is decreased in internal resistance and excellent in output characteristics.

### Solution to Problems

That is, the present invention relates to a method for producing a carbon material for an electric double layer capacitor electrode, comprising activating a graphitizable carbon material used as the raw material with 3 or more alkali metal compounds to produce an activated carbon having a BET specific surface area of 1500 to 3000 $m^2/g$ and a pore diameter corresponding to the maximum value in the pore size distribution as determined by the MP method within the range of 1 to 2 nm.

The present invention also relates to the foregoing method wherein the alkali metal compounds comprise at least 50 to 90 percent by mass of potassium hydroxide and 5 to 45 percent by mass of sodium hydroxide.
The present invention also relates to the foregoing method wherein the alkali metal compounds other than potassium hydroxide and sodium hydroxide are selected from the group consisting of alkali metal hydroxides, alkali metal carbonates, and alkali metal chlorides.

The present invention also relates to a carbon material for an electric double layer capacitor produced by the foregoing method.
Furthermore, the present invention also relates to an electric double layer capacitor produced using the foregoing carbon material.

### Advantageous Effects of Invention

The method of the present invention enables the production of a carbon material for an electric double layer capacitor electrode that is low in internal resistance and large in capacitance per unit volume.

### Brief Description of Drawings

[Fig. 1] a view showing the structure of a laminated cell produced in Example 1
[Fig. 2] a view showing a method for measuring the initial values (capacitance, internal resistance) of a capacitor

### Description of Embodiments

The present invention will be described in detail below.
Examples of the graphitizable carbon material used as the starting material in the present invention include petroleum coke and coal coke. The graphitizable carbon material may also be mesophase pitch and infusibilized and carbonized mesophase pitch fiber produced by spinning mesophase pitch. Petroleum coke is preferably used, and petroleum green coke is particularly preferably used.
Petroleum green coke, which is preferably used as the starting material in the present invention is an aggregate where polycyclic aromatic compounds having an alkyl side chain are layered and a solid that is not fusible by heat.

In the present invention, the graphitizable carbon may be activated as it is with alkali metal compounds but is preferably activated with alkali metal compounds after being carbonized (heat treatment). Carbonization is carried out at a temperature of usually 500 to 900°C, preferably 500 to 800°C in an inert gas. No particular limitation is imposed on the temperature rise rate during carbonization. However, a too slow rate would lead to a time-consuming carbonization treatment while a too rapid temperature rise would cause volatile components to volatilize explosively, possibly resulting in breakage of crystalline structures and also would the cost of an apparatus for carbonization to increase. The rate is thus preferably from 30 to 600°C/hour, more preferably from 60 to 300°C/hour. Once an intended carbonization temperature reaches, the temperature is preferably kept for a certain period of time. The period is usually on the order of 10 minutes to 2 hours.

Following this carbonization, activation is carried out using alkali metal compounds.
The present invention is characterized by using 3 or more alkali metal compounds as activating agents. As such alkali metal compounds, potassium hydroxide and sodium hydroxide are necessarily used. Other alkali metal compounds may be one or more compounds selected from alkali metal hydroxides, alkali metal carbonates, and alkali metal chlorides.

Examples of the alkali metal hydroxides include lithium hydroxide, rubidium hydroxide, cesium hydroxide, and francium hydroxide. Preferred is cesium hydroxide.
Examples of the alkali metal carbonates include lithium carbonate, sodium carbonate, potassium carbonate, rubidium carbonate, and cesium carbonate. Preferred are potassium carbonate and sodium carbonate.
Examples of the alkali metal chlorides include lithium chloride, sodium chloride, potassium chloride, rubidium chloride, and cesium chloride. Preferred are sodium chloride and potassium chloride.

The content of potassium hydroxide in the alkali metal compound to be used is from 50 to 90 percent by mass, preferably from 60 to 85 percent by mass. A potassium hydroxide content of less than 50 percent by mass is not preferable because a carbon material with a high specific surface area can not be produced. A potassium hydroxide content of more than 90 percent by mass is not also preferable because it is less effective in enlarging the pores of the resulting carbon material by being mixed with other components.
The content of sodium hydroxide in the alkali metal compound to be used is from 5 to 45 percent by mass, preferably from 10 to 40 percent by mass. A sodium hydroxide content of less than 5 percent by mass is not preferable because it is less effective in enlarging the pores of the resulting carbon material. A sodium hydroxide content of more than 45 percent by mass is not also preferably because a carbon material with a high specific surface area can not be produced.

The content of alkali metal compounds other than potassium hydroxide and sodium hydroxide in the alkali metal compound to be used is from 5 to 45 percent by mass, preferably from 10 to 40 percent by mass. A content of other alkali metal compounds of less than 5 percent by mass is not preferable because the maximum pore diameter of the resulting carbon material would be smaller than the optimum range of 1 to 2 nm. A content of other alkali metal compounds of more than 45 percent by mass is not also preferable because the maximum pore diameter of the resulting carbon material would be larger than 2 nm.

Activation may be carried out by a conventional method. That is, no particular limitation is imposed on the reaction conditions of the activation as long as the reaction can proceed sufficiently. Therefore, activation may be carried out under the same conditions as those of a conventional activation that is usually carried out for the production of activated carbon.
Specifically, activation may be carried out by mixing an activating agent containing 3 or more alkali metal hydroxides and a carbon material for activation that is a graphitizable carbon material and heating the mixture at an elevated temperature of preferably 400°C or higher, more preferably 600°C or higher, more preferably 700°C or higher. No particular limitation is imposed on the upper limit of the heating temperature if the activation proceeds without any problem. However, the upper limit is preferably 900°C or lower. No particular limitation is imposed on the mix ratio of the carbon material for activation and the activating agent. However, the mass ratio of the both (carbon material for activation : activating agent) is within the range of preferably 1:0.5 to 1:5, more preferably 1:1 to 1:3.

Thereafter, the resulting carbon material (activated carbon) is usually subjected to water washing for removing alkali metals, acid washing, water washing for removing acid, drying and pulverization to be a carbon material for an electric double layer capacitor electrode. If the amount of alkali metals remaining in the carbon material is less than the level (preferably 1000 ppm by mass or less) that possibly adversely affects the resulting electric double layer capacitor, no washing is required. However, the resulting carbon material is preferably washed so that the pH of the washed water is from 7 to 8 and washed so that the alkali metal is removed as much as possible. Pulverization may be carried out by a conventional method to produce fine powder with an average particle diameter of 0.5 to 50 $\mu$m, preferably 1 to 20 $\mu$m.

The carbon material thus produced by activation as described above has a specific surface area of 1500 to 3000 m$^2$/g, a pore diameter corresponding to the maximum value in the pore size distribution as determined by the MP method within the range of 1 to 2 nm, and an alkali metal amount of 200 ppm by mass or less.
The MP method is a method invented by R.S. Mikhail, S. Brunauner, E. E. Bodor (J. Colloid Interface Sci., 26, 45 (1968)) wherein nitrogen adsorption isotherms are obtained from nitrogen adsorption results at liquid nitrogen temperature and then micro pore volume, micro pore surface, and micro pore distribution are determined using the isotherms and "t-plot method" (B. C. Lippens, J. H. de Boer, J. Catalysis, 4, 319 (1965)).

Next, description will be given of the electric double layer capacitor of the present invention.
The electric double layer capacitor of the present invention is **characterized in that** it is provided with electrodes containing an activated carbon prepared as described above (carbon material for an electric double layer capacitor electrode).
The electrodes are constituted with the activated carbon and a binder and preferably in addition an electric conductive agent and may be electrodes that are integrated with a collector.
The binder used herein may be any conventional one. Examples of the binder include polyolefins such as polyethylene and polypropylene, fluorinated polymers such as polytetrafluoroethylene, polyvinylidene fluoride and fluoroolefin/vinylether cross-linked copolymers, celluloses such as carboxylmethyl cellulose, vinyl polymers such as polyvinylpyrrolidone and polyvinyl alcohol, and polyacrylic acids. No particular limitation is imposed on the content of the binder in the electrode. The content is usually selected within the range of 0.1 to 30 percent by mass on the basis of the total amount of the activated carbon and the binder.

The electric conductive agent may be a powdery material such as carbon black, powder graphite, titanium oxide and ruthenium oxide. The blend amount of the electric conductive material in the electrode is suitably selected depending on the purposes of blending. The blend amount is usually selected within the range of usually 1 to 50 percent by mass, preferably from 2 to 30 percent by mass on the basis of the total amount of the activated carbon, binder and electric conductive agent.

The activated carbon, binder and electric conductive agent may be mixed by a conventional method. For example, a method may be employed, wherein a solvent that dissolves the binder is added to these components to prepare slurry, which is then applied evenly on a collector or wherein these components are kneaded without adding such a solvent and pressed at ordinary temperature or while being heated.

The collector may be any of those of conventional materials with conventional shapes. Examples of the material include metals such as aluminum, titanium, tantalum, and nickel and alloys such as stainless.

The unit cell of the electric double layer capacitor of the present invention is formed by placing a pair of the above-described electrodes used as positive and negative electrodes to face each other via a separator (polypropylene fiber nonwoven fabric, glass fiber fabric or synthetic cellulose paper) and then immersing the electrodes into an electrolytic solution.

The electrolytic solution may be any of aqueous or organic electrolytic solutions known in the art. However, organic electrolytic solutions are preferably used. Examples of such organic electrolytic solutions include those used for electrochemical electrolytic solutions such as propylene carbonate, ethylene carbonate, butylene carbonate, γ-butyrolactone, sulfolane, sulfolane derivatives, 3-methylsulfolane, 1,2-dimethoxyethane, acetonitrile, glutaronitrile, valeronitrile, dimethylformamide, dimethylsulfoxide, tetrahydrofuran, dimethoxyethane, methyl formate, dimethyl carbonate, diethyl carbonate, and ethyl methyl carbonate. Note that these electrolytic solutions may be used in combination.

No particular limitation is imposed on the supporting electrolyte in the organic electrolytic solution. Therefore, the supporting electrolyte may be any of various salts, acids, and alkalis that are generally used in the electrochemical field or the battery field. Examples of such a supporting electrolyte include inorganic ionic salts such as alkali metal salts and alkaline earth metal salts, quaternary ammonium salts, cyclic quaternary ammonium salts, and quaternary phosphonium salts. Preferable examples include $(C_2H_5)_4NBF_4$, $(C_2H_5)_3(CH_3)NBF_4$, $(C_2H_5)_4PBF_4$, $(C_2H_5)_3(CH_3)PBF_4$. The concentrations of such salts in electrolytic solutions are properly selected from the range of usually 0.1 to 5 mol/1, preferably 0.5 to 3 mol/I.

No particular limitation is imposed on the more specific configuration of the electric double layer capacitor. However, example of the configuration include a coin type accommodating a pair of electrodes (positive and negative electrodes) in the form of sheet or disc with a thickness of 10 to 500 μm and a separator sandwiched between the electrodes, in a metal case, a wound type comprising a pair or electrodes and a separator disposed therebetween, all of which are wound, and a layered type comprising electrodes stacked via separators.

**Examples**

The present invention will be described in more details with reference to the following examples but is not limited thereto.

[Example 1]

Petroleum green coke having been adjusted in particle size to 2 mm or smaller was heated under a nitrogen gas atmosphere at a temperature of 550°C for one hour. Thereupon, the temperature rise rate was 200°C/hour. The heat-treated product (carbon material for activation) was pulverized with a jet mill to have an average particle size of 7 μm. The pulverized product was mixed with alkali metal compounds so that the total amount thereof was 220 parts by mass (80 percent by mass of potassium hydroxide, 10 percent by mass of sodium hydroxide, and 10 percent by mass of cesium hydroxide) on the basis of 100 parts by mass of the pulverized product. Activation of the mixture was allowed to proceed under a nitrogen gas atmosphere at a temperature of 750 °C for one hour, and then the mixture was repeatedly washed with water and acid (hydrochloric acid was used) to remove the remaining metal potassium in the carbon material and dried thereby producing an activated product (carbon material for an electric double layer capacitor electrode). The resulting activated product was 2230 $m^2$/g in a specific surface area determined by nitrogen gas sorption method (BET method) and 1.077$cm^3$/g in pore volume. The pore diameter exhibiting the maximum in the pore size distribution by the MP method was 1.6 nm.

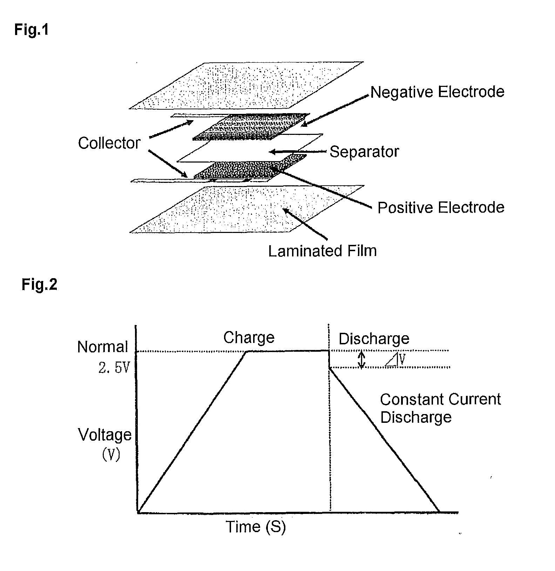

The resulting electrode carbon material was mixed with carbon black and polytetrafluoroethylene powder and then pressed thereby producing a carbon electrode sheet with a thickness of around 150 to 300 μm. Electrodes with a predetermined size were cut out from the sheet to produce a laminate cell shown in Fig. 1. The cell was used to evaluate the carbon electrode material for a capacitor. The electrolyte was a propylene carbonate (PC) solution of 1.5 M of tirethylmethylammonium tetrafluoro borate (TEMA·BF$_4$).

The laminate cell was used to measure the initial characteristics of the capacitor (capacitance, internal resistance). Fig. 2 shows the method of the measurement.

Capacitance was determined by measuring the total energy amount stored in the capacitor for calculation (energy conversion method).

$$\mathtt{Capacitance:\ C=2U/Vc^2 \quad Vc=Vm-\Delta V}$$

U: Total discharge energy (integral value of discharge curve from full charge Vm to 0V)

Vc: Actual voltage obtained by subtracting a voltage drop due to internal resistance from full charged voltage

Internal resistance was calculated from IR drop immediately after the initiation of discharge.

$$\mathtt{Internal\ resistance:\ R(\Omega)=\Delta V/I}$$

wherein I is a discharge current (A).

The rate factors of the capacitor were determined by measuring the capacitance after the constant current discharge was changed from 0.36 mA/cm$^2$ to 72 mA/cm$^2$. The results of the rate factor were summarized as the maintenance rate of capacitance upon change of the constant current discharge on the basis of the capacitance at a discharge of 0.36 mA/cm$^2$. The results are set forth in Table 2.

[Examples 2 and 3, and Comparative Examples 1 and 2]

The same experiment as described above was carried out with various conditions. The results are set forth in Tables 1 and 2.

It is confirmed from the results in Tables 1 and 2 that the use of 3 or more alkali metal compounds that were 50 to 90 percent by mass of KOH, 5 to 45 percent by mass of NaOH and 5 to 45 percent by mass of other alkali metal compounds (Examples 1 to 3) resulted in carbon materials with a maximum pore diameter of 1 to 2 nm and capacitors having a smaller internal resistance, more excellent rate factors, and a larger capacitance per unit volume than the use of two types of alkali metal compounds, i.e., KOH and NaOH (Comparative Example 1). However, the use of 3 types of alkali metal compounds with formulations thereof deviating the range defined by the present invention (Comparative Example 2) resulted in the maximum pore diameters larger than 2 nm, relatively larger internal resistance, and smaller capacitance per unit volume.

[Table 1]

| | | | Example 1 | Example 2 | Example 3 | Comparative Example 1 | Comparative Example 2 |
|---|---|---|---|---|---|---|---|
| Activation Conditions | Carbon Material for Activation (parts by mass) | | 100 | 100 | 100 | 100 | 100 |
| | Alkali Metal Compound (parts by mass) | | 220 | 260 | 260 | 220 | 220 |
| | Alkali Metal Compound Brekdown (mass%) | 1st. Component | KOH80 | KOH:65 | KOH :50 | KOH :50 | KOH:10 |
| | | 2nd.Component | NaOH :10 | NaOH :15 | NaOH :30 | NaOH :50 | NaOH :50 |
| | | 3rd. Component | CsOH :10 | Cs$_2$CO$_3$ :10 | CsCl:20 | - | CsOH :40 |
| | | 4th. Component | - | K$_2$CO$_3$ :10 | - | - | - |

(continued)

|  |  | Example 1 | Example 2 | Example 3 | Comparative Example 1 | Comparative Example 2 |
|---|---|---|---|---|---|---|
|  | Activation Temperature (°C) | 750 | 700 | 700 | 750 | 750 |
| Physical Properties | Specific Surface Area (m²/g) | 2230 | 2130 | 2080 | 2260 | 1480 |
|  | Pore Volume (Cm³/g) | 1.077 | 1.023 | 1.014 | 1.100 | 0.871 |
|  | Maximum Pore Diameter (nm) | 1.6 | 1.1 | 1.2 | 0.8 | 2.7 |

[Table 2]

|  | Example 1 | Example 2 | Example 3 | Comparative Example 1 | Comparative Example 2 |
|---|---|---|---|---|---|
| Electrode Density g/cc | 0.53 | 0.53 | 0.51 | 0.50 | 0.52 |
| Capacitance perUnitM ass F/g | 47.4 | 44.8 | 45.3 | 45.8 | 41.3 |
| Capacitance perUnitVolume F/cc | 25.1 | 23.7 | 23.1 | 22.9 | 21.5 |
| InternalResistance Ω | 2.5 | 2.5 | 3.1 | 3.6 | 3.7 |
| Rate Factors %*) | 59.6 | 55.5 | 58.3 | 51.5 | 46.7 |
| *) Maintenance rate of capacitance at a constant current discharge (72mA/cm²) on the basis of capacitance per volume at a constant current discharge (0.36mA/cm²) | | | | | |

Applicability in the Industry

The use of an activated carbon produced by the method of the present invention for an electric double layer capacitor enables the production of an electric double layer capacitor having a small internal resistance and a relatively large capacitance per unit volume, which is significantly large in industrial value.

**Claims**

1. A method for producing a carbon material for an electric double layer capacitor electrode, comprising activating a graphitizable carbon material used as the raw material with 3 or more alkali metal compounds to produce an activated carbon having a BET specific surface area of 1500 to 3000 m²/g and a pore diameter corresponding to the maximum value in the pore size distribution as determined by the MP method within the range of 1 to 2 nm.

2. The method according to claim 1 wherein the alkali metal compounds comprise at least 50 to 90 percent by mass of potassium hydroxide and 5 to 45 percent by mass of sodium hydroxide.

3. The method according to claim 1 or 2 wherein the alkali metal compounds other than potassium hydroxide and sodium hydroxide are selected from the group consisting of alkali metal hydroxides, alkali metal carbonates, and alkali metal chlorides.

4. A carbon material for an electric double layer capacitor produced by the method according to any one of claims 1 to 3.

5. An electric double layer capacitor comprising the carbon material for an electric double layer capacitor electrode according to claim 4.

**Fig.1**

Negative Electrode

Collector

Separator

Positive Electrode

Laminated Film

**Fig.2**

EP 2 418 664 A1

<table>
<tr><td colspan="2" align="center">INTERNATIONAL SEARCH REPORT</td><td>International application No.<br>PCT/JP2010/001727</td></tr>
</table>

A. CLASSIFICATION OF SUBJECT MATTER
*H01G9/058*(2006.01)i, *C01B31/12*(2006.01)i

According to International Patent Classification (IPC) or to both national classification and IPC

B. FIELDS SEARCHED

Minimum documentation searched (classification system followed by classification symbols)
H01G9/058, C01B31/12

Documentation searched other than minimum documentation to the extent that such documents are included in the fields searched
Jitsuyo Shinan Koho        1922-1996   Jitsuyo Shinan Toroku Koho   1996-2010
Kokai Jitsuyo Shinan Koho   1971-2010   Toroku Jitsuyo Shinan Koho   1994-2010

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2006-59923 A  (Nippon Oil Corp.),<br>02 March 2006 (02.03.2006),<br>paragraphs [0026] to [0038]<br>& US 2007/0258189 A1     & EP 1786008 A1<br>& WO 2006/019053 A1 | 1-5 |
| A | JP 2001-302226 A  (Kawasaki Steel Corp.),<br>31 October 2001 (31.10.2001),<br>paragraph [0014]<br>(Family: none) | 1-5 |
| A | JP 2002-15958 A  (Honda Motor Co., Ltd.),<br>18 January 2002 (18.01.2002),<br>paragraphs [0009] to [0011]<br>& US 2007/0183958 A1     & WO 2001/013390 A1 | 1-5 |

☐ Further documents are listed in the continuation of Box C.        ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>24 May, 2010 (24.05.10) | Date of mailing of the international search report<br>01 June, 2010 (01.06.10) |
|---|---|
| Name and mailing address of the ISA/<br>Japanese Patent Office | Authorized officer |
| Facsimile No. | Telephone No. |

Form PCT/ISA/210 (second sheet) (July 2009)

9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001302226 A

- JP 2002015958 A

**Non-patent literature cited in the description**

- *Tansozairyo no kenkyu kaihatsu doko,* March 2009, 23-33
- **R.S. Mikhail ; S. Brunauer ; E. E. Bodor.** *J. Colloid Interface Sci.,* 1968, vol. 26, 45

- **B. C. Lippens ; J. H. de Boer.** *J. Catalysis,* 1965, vol. 4, 319